# EUROPEAN PATENT APPLICATION

(11) **EP 4 491 580 A1**
(43) Date of publication of application: **15.01.2025**
(21) Application number: 22930996.8
(22) Date of filing: 25.10.2022
(51) Int. Cl.: C01G 35/00

(54) **TANTALIC ACID COMPOUND DISPERSION LIQUID AND METHOD FOR PRODUCING SAME**

(30) Priority: 11.03.2022 JP 2022037839
(71) Applicant: Mitsui Mining & Smelting Co., Ltd, Shinagawa-ku Tokyo 141-8584 (JP)
(72) Inventor: ARAKAWA, Daiki, Omuta-shi, Fukuoka 836-0003 (JP); SEKI SATO, Riko, Omuta-shi, Fukuoka 836-0003 (JP); HARA, Shuhei, Omuta-shi, Fukuoka 836-0003 (JP)
(74) Representative: Novagraaf Technologies
(86) International application number: PCT/JP2022/039739
(87) International publication number: WO 2023/171020

(57) **Abstract**

The tantalic acid compound dispersion of the present invention is a tantalic acid compound dispersion containing tantalum in an amount of 0.1 mass% or more and less than 30 mass% in terms of Ta₂O₅, in which a particle diameter (D50) of a tantalic acid compound in the tantalic acid compound dispersion as determined by a dynamic light scattering method is 100 nm or smaller. Further, a method of producing the tantalic acid compound dispersion of the present invention includes: a reaction step of generating a tantalum compound aqueous solution by adding hydrogen peroxide to a tantalum fluoride aqueous solution; and a reverse neutralization step of generating a tantalum-containing precipitate by adding the tantalum compound aqueous solution to an alkaline aqueous solution.

## Description

### Technical Field

The present invention relates to a tantalic acid compound dispersion and a method of producing the same.

### Background Art

A tantalic acid compound is used for materials such as optoelectronics or catalysts. Patent Literature 1 discloses a tantalum oxide sol as a tantalic acid compound that includes uniform particles and can be stored for a long period of time as a coating agent for surfaces of various parts. Further, the tantalic acid compound, particularly, lithium tantalate is excellent in optical characteristics, non-linear characteristics, and electro-optical characteristics, and is used in a piezoelectric element or the like. For example, Patent Literature 2 discloses a composite active material particle capable of reducing battery resistance generated in an all-solid-state lithium ion battery. As one of lithium ion conductive oxides covering at least a part of a surface of the composite active material particle, the lithium tantalate is mentioned together with lithium niobate.

### Citation List

### Patent Literature

Patent Literature 1: JP H8-143315 A
Patent Literature 2: JP 2018-125214 A

### Summary of Invention

### Technical Problem

However, since the tantalum oxide sol disclosed in Patent Literature 1 contains an organic component that is hardly volatilized, such as an oxalic acid, the organic component may be a factor that hinders formation of a uniform film, and may be a factor that inhibits a catalytic action when the tantalum oxide sol is used as a catalyst additive. Further, the lithium tantalate has poor dispersibility and solubility in water as compared with the lithium niobate, and is prone to forming precipitates over time, and the lithium tantalate produced using a method of producing the lithium niobate disclosed in Patent Literature 2 has low dispersibility in water, poor solubility in water, and is not excellent in storage stability.

In view of the above problems, the present invention provides a tantalic acid compound dispersion having high dispersibility in a polar solvent, particularly water, good solubility in water, and excellent storage stability, and a method of producing the same.

### Solution to Problem

The tantalic acid compound dispersion of the present invention made to solve the above problems is a tantalic acid compound dispersion containing tantalum in an amount of 0.1 mass% or more and less than 30 mass% in terms of Ta₂O₅, in which a particle diameter (D50) of the tantalic acid compound in the tantalic acid compound dispersion as determined by a dynamic light scattering method is 100 nm or smaller.

The tantalic acid compound dispersion of the present invention contains the tantalum in the amount of 0.1 mass% or more and less than 30 mass% in terms of Ta₂O₅, which is preferable from a viewpoint of improving the dispersibility and the solubility in the polar solvent, particularly water. Further, the tantalic acid compound dispersion of the present invention is more preferably 0.5 mass% or more, and still more preferably 1 mass% or more. Meanwhile, the tantalic acid compound dispersion of the present invention is more preferably 25 mass% or less, and still more preferably 20 mass% or less.

Here, a tantalum concentration in the tantalic acid compound dispersion is calculated by appropriately diluting the dispersion with a dilute hydrochloric acid if necessary, and measuring a Ta weight fraction in terms of tantalum oxide (Ta₂O₅) in accordance with JIS K0116:2014 using ICP emission spectrometry (AG-5110 manufactured by Agilent Technologies). Note that a tantalic acid in the tantalic acid compound dispersion of the present invention is not necessarily present in a state of Ta₂O₅. Content of the tantalic acid is indicated in terms of Ta₂O₅ based on a practice of indicating the tantalum concentration.

Here, it is presumed that the tantalic acid compound in the tantalic acid compound dispersion of the present invention is present in the dispersion as ions in a state where the tantalic acid is ionically bonded to an organic nitrogen compound, an alkali metal, or an alkaline earth metal to be described later. In the tantalic acid compound dispersion of the present invention, hydroxide ions are present as anions, but halide ions such as fluoride ions and chloride ions hardly exist, and the organic nitrogen compound and the alkali metal are present as cations. Therefore, the tantalum can be considered to be present as anions such as TaO₃⁻ or polyoxometalate (polyacid) ions in which a plurality of tantalum atoms and oxygen atoms are bonded.

Further, in addition to the tantalic acid compound, the tantalic acid compound dispersion of the present invention also contains an ionized alkaline aqueous solution, for example, ammonia. Although described in detail in a method of producing the tantalic acid compound dispersion of the present invention to be described later, in a corresponding production step, a tantalic acid-containing precipitate, for example, a hydrous ammonium tantalate cake that is a precipitation slurry containing tantalum, is produced by a reverse neutralization method in which an acidic tantalum complex aqueous solution is added to an alkaline aqueous solution, for example, ammonia water, and then the tantalic acid compound dispersion of the present invention is produced. Therefore, it can be considered that the ammonia contains ammonium ions and exists in the dispersion as the cations.

Examples of a method of measuring an ammonia concentration present in the dispersion include a method in which sodium hydroxide is added to the dispersion, the ammonia is distilled and separated, and the ammonia concentration is quantified with an ion meter, a method in which N₂ content in a gasified sample is quantified with a thermal conductivity meter, a Kjeldahl method, gas chromatography (GC), ion chromatography, and a gas chromatography/mass spectrometry (GC-MS) method. In particular, the method in which the ammonia concentration is quantified with the ion meter is preferable.

Moreover, the particle diameter (D50) of the tantalic acid compound in the tantalic acid compound dispersion as determined by the dynamic light scattering method is 100 nm or smaller, which is preferable from viewpoints of high dispersibility, little change over time, good stability, reactivity during reaction with other substances or formation of a composite, and film uniformity during formation of a film. Further, the particle diameter (D50) of the tantalic acid compound is preferably a smaller particle diameter, more preferably 50 nm or smaller, still more preferably 30 nm or smaller, particularly preferably 20 nm or smaller, still more particularly preferably 10 nm or smaller, even more particularly preferably 1 nm or smaller, and even more particularly preferably 0.6 nm or smaller. Accordingly, a liquid in which the particle diameter (D50) of the tantalic acid compound in the tantalic acid compound dispersion of the present invention is 100 nm or smaller as a result of measuring the particle diameter (D50) of the tantalic acid compound in the tantalic acid compound dispersion of the present invention using the dynamic light scattering method.

Here, the dynamic light scattering method is a method in which a light scattering intensity from a group of particles moving in a Brownian motion is measured by irradiating a solution such as a suspension solution with light such as a laser beam, and a particle diameter and a distribution are obtained from temporal variation of the intensity. Specifically, a method of evaluating particle size distribution is performed in accordance with JIS Z 8828:2019 "particle diameter analysis-dynamic light scattering method" using a zeta potential/particle diameter/molecular weight measurement system (ELSZ-2000 manufactured by Otsuka Electronics Co., Ltd.). Note that, in order to remove dust or the like in a solution to be measured immediately before the measurement, the solution is filtered with a filter having a pore size of 1 µm, and subjected to ultrasonic treatment at 28 kHz for 3 minutes with an ultrasonic cleaner (VS-100III manufactured by AS ONE CORPORATION). Note that the particle diameter (D50) refers to a median diameter (D50) that is a particle diameter indicating a 50% integrated value of an integrated distribution curve.

Note that the "dispersion" in the present invention is not limited to a dispersion in which a solute is dispersed or mixed in a state of a single molecule in a solvent, and also includes an assembly in which a plurality of molecules is attracted by intermolecular interaction, for example, (1) multimer molecules, (2) solvated molecules, (3) a molecular cluster, and (4) colloidal particles are dispersed in a solvent.

Further, the tantalic acid compound dispersion of the present invention contains the organic nitrogen compound.

It is presumed that the tantalic acid in the tantalic acid compound dispersion of the present invention is present in the dispersion as the ions in the state of being ionically bonded to the organic nitrogen compound.

Here, examples of the organic nitrogen compound include an aliphatic amine, an aromatic amine, an amino alcohol, an amino acid, a polyamine, a quaternary ammonium, a guanidine compound, and an azole compound.

Examples of the aliphatic amine include methylamine, dimethylamine, trimethylamine, ethylamine, methylethylamine, diethylamine, triethylamine, methyldiethylamine, dimethylethylamine, n-propylamine, din-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine and tert-butylamine, n-pentamine, n-hexylamine, cyclohexylamine, and piperidine.

Examples of the aromatic amine include aniline, phenylenediamine, and diaminotoluene. Moreover, examples of the amino alcohol include methanolamine, ethanolamine, propanolamine, butanolamine, pentanolamine, dimethanolamine, diethanolamine, trimethanolamine, methylmethanolamine, methylethanolamine, methylpropanolamine, methylbutanolamine, ethylmethanolamine, ethylethanolamine, ethylpropanolamine, dimethylmethanolamine, dimethylethanolamine, dimethylpropanolamine, methyldimethanolamine, methyldiethanolamine, diethylmethanolamine, trishydroxymethylaminomethane, bis(2-hydroxyethyl)aminotris(hydroxymethyl)methane, and aminophenol. Further, examples of the amino acid include an alanine, an arginine, an aspartic acid, and EDTA. Moreover, examples of the polyamine include polyamine and polyether amine.

Examples of the quaternary ammonium include alkylimidazolium, pyridinium, pyrrolidium, and tetraalkylammonium. Here, specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Further, specific examples of the pyridinium and the pyrrolidium include N-butyl-pyridinium, N-ethyl-3-methyl-pyridinium, N-butyl-3-methyl-pyridinium, N-hexyl-4-(dimethylamino)-pyridinium, N-methyl-1-methylpyrrolidinium, and N-butyl-1-methylpyrrolidinium. Moreover, specific examples of the tetraalkylammonium include tetramethylammonium, tetraethylammonium, tetrabutylammonium, and ethyl-dimethyl-propylammonium. Note that examples of anions that form a salt with the above-described cations include OH⁻, Cl⁻, Br⁻, I⁻, BF₄⁻, and HSO₄⁻.

Examples of the guanidine compound include guanidine, diphenylguanidine, and ditolylguanidine. Further, examples of the azole compound include an imidazole compound and a triazole compound. Here, specific examples of the imidazole compound include imidazole, 2-methylimidazole, and 2-ethyl-4-methylimidazole. Further, specific examples of the triazole compound include 1,2,4-triazole, 1,2,4-triazole-3-carboxylate methyl, and 1,2,3-benzotriazole.

Here, the organic nitrogen compound is preferably an aliphatic amine for high volatility and low toxicity. Specifically, an aliphatic amine having 1 or more and 4 or less carbon atoms is more preferable, and an aliphatic amine having 1 or more and 2 or less carbon atoms is particularly preferable. Examples thereof include methylamine and dimethylamine.

Further, the organic nitrogen compound is quaternary ammonium, which is preferable from a viewpoint of having not only high solubility but also efficient crystallization suppression and solation suppression. For example, a tetraalkylammonium salt is preferable, a tetraalkylammonium hydroxide salt is more preferable, tetramethylammonium hydroxide and tetraethylammonium are still more preferable, and tetramethylammonium hydroxide (TMAH) is also particularly preferable.

Moreover, the organic nitrogen compound is not one selected from the aliphatic amine, the aromatic amine, the amino alcohol, the amino acid, the polyamine, the quaternary ammonium, the guanidine compound, and the azole compound, but may be a mixture of two or more thereof. For example, a mixture of two compounds, the aliphatic amine and the quaternary ammonium, is preferable from a viewpoint that the solubility can be improved while suppressing an addition amount of the mixture without increasing the toxicity.

Specific examples thereof include a mixture of two organic nitrogen compounds such as the methylamine and the tetramethylammonium hydroxide (TMAH), the dimethylamine and the tetramethylammonium hydroxide (TMAH), and the methylamine and the dimethylamine, as well as a mixture of three organic nitrogen compounds such as the methylamine, the dimethylamine, and the tetramethylammonium hydroxide (TMAH) .

Note that examples of a method of measuring an organic nitrogen compound concentration present in the tantalic acid compound dispersion of the present invention include gas chromatography (GC), liquid chromatography (LC), mass spectrometry (MS), gas chromatography/mass spectrometry (GC-MS), and liquid chromatography/mass spectrometry (LC-MS). In a case where an organic nitrogen compound having low volatility is contained, the organic nitrogen compound concentration is preferably measured by the liquid chromatography (LC) or the liquid chromatography/mass spectrometry (LC-MS).

Further, the tantalic acid compound dispersion of the present invention contains one or more elements M selected from the group consisting of alkali metal elements or alkaline earth metal elements. Moreover, the element M is preferably Li.

It is presumed that the tantalic acid in the tantalic acid compound dispersion of the present invention is present in the dispersion as ions in a state of being ionically bonded to ions of one or more elements M selected from the group consisting of the alkali metal elements or the alkaline earth metal elements. Moreover, the element M is preferably Li. Further, the element M is not limited to only one alkali metal element of Li, and is suitably two alkali metal elements of Li and Na or K or three alkali metal elements of Li, Na and K. Moreover, the element M may be one alkali metal element of Na or K, or two alkali metal elements of Na and K.

Further, in the tantalic acid compound dispersion of the present invention, a tantalic acid concentration in the tantalic acid compound dispersion is 0.1 mass% or higher and 15 mass% or lower in terms of Ta₂O₅.

The tantalic acid concentration in the tantalic acid compound dispersion is preferably 0.1 mass% or higher and 15 mass% or lower in terms of Ta₂O₅ from a viewpoint of achieving both practicability and stability of a lithium tantalate dispersion, more preferably 1 mass% or higher and 15 mass% or lower in terms of Ta₂O₅, still more preferably 3 mass% or higher and 10 mass% or lower in terms of Ta₂O₅, and particularly preferably 5 mass% or higher and 10 mass% or lower in terms of Ta₂O₅.

Here, the tantalic acid concentration in the tantalic acid compound dispersion is calculated by appropriately diluting the dispersion with the dilute hydrochloric acid if necessary, and measuring a Ta weight fraction in terms of Ta₂O₅ in accordance with JIS K0116:2014 using the ICP emission spectrometry (AG-5110 manufactured by Agilent Technologies). By indicating the tantalic acid concentration in the tantalic acid compound dispersion of the present invention in terms of Ta₂O₅, a plurality of oxide states of the tantalum can be collectively determined. Further, in a case where the tantalic acid in the tantalic acid compound dispersion of the present invention is one ionically bonded to the alkali metal or the alkaline earth metal, for example, a lithium tantalate salt ionically bonded to the lithium ion, a lithium concentration may be calculated by measuring a Li weight fraction in terms of Li. By specifying the tantalic acid concentration and the lithium concentration in the tantalic acid compound dispersion of the present invention, it is possible to specify a molar ratio Li/Ta of the lithium (Li) to the tantalum (Ta) of the lithium tantalate contained in the tantalic acid compound dispersion of the present invention.

Moreover, the tantalic acid concentration in the tantalic acid compound dispersion of the present invention can also be indicated in terms of Ta. The above-described tantalic acid concentration in terms of Ta is as follows. The tantalic acid concentration in the tantalic acid compound dispersion is preferably 0.08 mass% or higher and 12.3 mass% or lower in terms of Ta from the viewpoint of achieving both the practicability and the stability of the lithium tantalate dispersion, more preferably 0.8 mass% or higher and 12.3 mass% or lower in terms of Ta, still more preferably 2.4 mass% or higher and 8.2 mass% or lower in terms of Ta, and particularly preferably 4.1 mass% or higher and 8.2 mass% or lower in terms of Ta.

Further, in the tantalic acid compound dispersion of the present invention, the molar ratio Li/Ta of the lithium (Li) to the tantalum (Ta) of the lithium tantalate contained in the tantalic acid compound dispersion is preferably 0.8 or higher and 1.5 or lower.

The molar ratio Li/Ta of the lithium (Li) to the tantalum (Ta) in the lithium tantalate contained in the tantalic acid compound dispersion is 0.8 or higher and 1.5 or lower, which is preferable from the viewpoint of improving the dispersibility and the solubility in water, more preferably 0.8 or higher and 1.3 or lower, still more preferably 0.9 or higher and 1.2 or lower, and particularly preferably 0.9 or higher and 1.1 or lower.

Moreover, the ammonia concentration in the tantalic acid compound dispersion of the present invention containing the lithium tantalate may be any concentration. For example, the ammonia concentration may be more than 0 mass% and 10 mass% or lower, 0.001 mass% or higher and 10 mass% or lower, or 0.003 mass% or higher and 5 mass% or lower.

Further, the tantalic acid compound dispersion of the present invention preferably does not contain an organic acid.

Since the tantalic acid compound dispersion of the present invention does not contain the organic acid, polyacid ions contained in the tantalic acid compound dispersion are stabilized.

Further, the tantalic acid compound dispersion of the present invention is an aqueous dispersion.

The tantalic acid compound in the tantalic acid compound dispersion of the present invention has high dispersibility in water and good solubility in water, and therefore, pure water can be used as a solvent. As the solvent, an organic solvent may also be used. Examples of the organic solvent include an alcohol solvent, a ketone solvent, an ether solvent, an ester solvent, an aromatic hydrocarbon solvent, and an aliphatic hydrocarbon solvent, and a solvent obtained by mixing these organic solvents with the pure water may also be used. Further, examples of the alcohol solvent include alcohols having 5 or less carbon atoms (methanol, ethanol, n-propanol, isopropyl alcohol, butanol, ethylene glycol, propylene glycol, and glycerin) and acetone.

Further, in the tantalic acid compound dispersion of the present invention, a pH of the tantalic acid compound dispersion is more than 7.

The pH of the tantalic acid compound dispersion of the present invention is more than 7, which is preferable from a viewpoint that the polyacid ions contained in the dispersion are stabilized. Further, the pH of the tantalic acid compound dispersion of the present invention is more preferably 8 or higher, still more preferably 9 or higher, particularly preferably 10 or higher, more particularly preferably 11 or higher, and may be 12 or higher. Note that it is preferable that the tantalic acid compound dispersion of the present invention does not contain the organic acid from a viewpoint of lowering the pH of the dispersion in a case where the organic acid is contained.

Besides the tantalic acid compound dispersion of the present invention, the pH of the tantalic acid compound dispersion containing the organic nitrogen compound is suitably 10.0 to 14.1. Meanwhile, besides the tantalic acid compound dispersion of the present invention, the pH of the tantalic acid compound dispersion containing one or more elements M selected from the group consisting of the alkali metal elements or the alkaline earth metal elements is suitably 11 to 13.

Here, the pH of the tantalic acid compound dispersion of the present invention is measured after an electrode (a standard ToupH electrode 9615S-10D manufactured by HORIBA, Ltd.) of a pH meter (a glass electrode type hydrogen ion concentration indicator D-51 manufactured by HORIBA, Ltd.) in the tantalic acid compound dispersion of the present invention is immersed and a liquid temperature of the dispersion is confirmed to be stabilized at 25°C.

Further, the tantalic acid compound dispersion of the present invention may contain an element that does not constitute the tantalic acid compound contained in the tantalic acid compound dispersion of the present invention or a compound thereof as an additive. Examples of the additive include elements such as Li, Na, Mg, Al, Si, K, Ca, Ti, V, Mn, Fe, Co, Ni, Cu, Zn, Sr, Zr, Nb, Mo, Sn, Ba, La, and W, and compounds thereof. Here, examples of the compounds include an oxide, a metal acid alkali metal salt, a metal acid alkaline earth metal salt, a chloride, metal acid alkoxide, and polyoxometalate. Further, regarding content of the additive in the tantalic acid compound dispersion of the present invention, in a case where a total content molar number of each of the elements, which is the additive, is set as X, a molar ratio X/Ta of the total content molar number (X) of each of the elements, which is an additive, to the tantalum (Ta), may be 0.001 to 75, 0.002 to 50, 0.01 to 40, 0.2 to 30, 0.5 to 25, 0.8 to 1.5, 0.8 to 1.3, 0.9 to 1.2, or 0.9 to 1.1. Moreover, this is because improvement in uniformity and improvement in reactivity (reaction rate) are expected even in a case where these compounds are in a suspended state, since the tantalic acid compound dispersion of the present invention is a uniform dispersion. Further, if these compounds are dissolved in the tantalic acid compound dispersion of the present invention to form a uniform dispersion, complexing elements can have most favorable reactivity.

Moreover, the tantalic acid compound dispersion of the present invention may also contain components other than components derived from the tantalum or the tantalic acid and components derived from the ammonia, the organic nitrogen compound, and the element M (referred to as "other components") as long as an action and effect of the dispersion is not inhibited. Examples of the other components include Li, Na, Mg, Al, Si, K, Ca, Ti, V, Mn, Fe, Co, Ni, Cu, Zn, Sr, Zr, Nb, Mo, Sn, Ba, La, and W. However, the present invention is not limited thereto. In a case where the tantalic acid compound dispersion of the present invention is 100 mass%, content of the other components is preferably 5 mass% or less, more preferably 4 mass% or less, and still more preferably 3 mass% or less. Note that the tantalic acid compound dispersion of the present invention is assumed to unintentionally contain inevitable impurities. Content of the inevitable impurities is preferably 0.01 mass% or less.

A tantalic acid compound powder of the present invention contains the tantalic acid compound in the above-described tantalic acid compound dispersion of the present invention.

The tantalic acid compound powder of the present invention includes a dried powder obtained by drying, for example, drying under vacuum, the tantalic acid compound dispersion of the present invention, and a fired powder obtained by firing the obtained dried powder. Further, the tantalic acid compound powder of the present invention also includes a tantalic acid compound powder having different physical properties such as a crystal structure generated by drying under vacuum or firing the tantalic acid compound dispersion of the present invention, and may be in an amorphous structure, a single crystal structure, or a polycrystalline structure. Note that a method of producing the tantalic acid compound powder of the present invention will be described later.

A tantalic acid compound film of the present invention contains the tantalic acid compound in the above-described tantalic acid compound dispersion of the present invention.

The tantalic acid compound film of the present invention includes a dried film obtained by drying, for example, drying under vacuum, the tantalic acid compound dispersion of the present invention after being applied to a surface of a substrate, and a fired film obtained by firing the obtained dried film. Further, the tantalic acid compound film of the present invention also includes a tantalic acid compound film having different physical properties such as a crystal structure generated by drying under vacuum or firing the tantalic acid compound dispersion of the present invention, and may be in an amorphous structure, a single crystal structure, or a polycrystalline structure. Since a tantalum compound that is a raw material of the tantalic acid compound film of the present invention has high chemical resistance, covering the surface of the substrate with the tantalic acid compound film of the present invention can improve high-temperature characteristics (for example, protection from deterioration of the substrate due to heat) and chemical resistance of the substrate. Note that a method of producing the tantalic acid compound film of the present invention will be described later.

A coating agent of the present invention contains at least one of the above-described tantalic acid compound dispersion of the present invention or the above-described tantalic acid compound powder of the present invention.

The coating agent of the present invention contains at least one of the tantalic acid compound dispersion of the present invention having high dispersibility in water, good solubility in water, and excellent storage stability, or the tantalic acid compound powder of the present invention, and for example, it is possible to form a uniform coating film by applying the coating agent to a surface of a positive electrode active material for a lithium ion secondary battery.

The above-described tantalic acid compound dispersion of the present invention can be used for covering a positive electrode material or a positive electrode for a lithium ion secondary battery. Further, the tantalic acid compound dispersion of the present invention can be used for covering a positive electrode material or a positive electrode for an all-solid-state lithium ion battery.

The tantalic acid compound dispersion of the present invention is suitable for being used to cover the positive electrode material for the lithium ion secondary battery or the positive electrode, from results of a time-dependent stability test in which a state of the dispersion is visually observed after being left to stand for 1 month in a thermostat set at a room temperature (25°C), and a film formability test in which the dispersion is applied to a glass substrate as a substitute for a current collector plate of the positive electrode for the lithium ion secondary battery, and a state of the coating film is observed with an optical microscope, in addition to results of measuring a time-dependent particle diameter (D50) of tantalic acid compound particles in the dispersion by the dynamic light scattering method.

Further, the tantalic acid compound dispersion of the present invention is suitable for covering the surface of the positive electrode active material for the lithium ion secondary battery. Covering the surface of the positive electrode with the positive electrode active material for the lithium ion secondary battery covered with the tantalic acid compound of the present invention can improve performance as the lithium secondary battery.

The method of producing the above-described tantalic acid compound dispersion of the present invention will be described below.

The method of producing the tantalic acid compound dispersion of the present invention includes: a reaction step of generating a tantalum compound aqueous solution by adding hydrogen peroxide to a tantalum fluoride aqueous solution; and a reverse neutralization step of generating a tantalum-containing precipitate by adding the tantalum compound aqueous solution to an alkaline aqueous solution.

First, the tantalum fluoride aqueous solution can be prepared by reacting the tantalum, tantalum oxide, or tantalum hydroxide with a hydrofluoric acid (HF) such as a hydrofluoric acid aqueous solution to form tantalum fluoride (H₂TaF₇), and dissolving the tantalum fluoride in water.

Here, an acidic tantalum solution containing fluoride ions, for example, the tantalum fluoride aqueous solution is preferably adjusted to contain 1 to 100 g/L of the tantalum in terms of Ta₂O₅ by adding water (for example, the pure water). At this time, the tantalum concentration is 1 g/L or more in terms of Ta₂O₅, which is preferable because a tantalic acid compound hydrate easily soluble in water is generated, and in consideration of productivity, the tantalum concentration is more preferably 10 g/L or more, and still more preferably 20 g/L or more. Meanwhile, the tantalum concentration is 100 g/L or less in terms of Ta₂O₅, which is preferable because the tantalic acid compound hydrate easily soluble in water is generated, and in order to synthesize the tantalic acid compound hydrate more reliably soluble in water, the tantalum concentration is more preferably 90 g/L or less, still more preferably 80 g/L or less, and particularly preferably 70 g/L or less. Note that the pH of the tantalum fluoride aqueous solution is preferably 2 or lower, and more preferably 1 or lower from a viewpoint of completely dissolving the tantalum and the tantalum oxide.

Next, in the reaction step of generating the tantalum compound aqueous solution by adding the hydrogen peroxide to the tantalum fluoride aqueous solution, the tantalum compound aqueous solution is obtained by adding hydrogen peroxide water to the tantalum fluoride aqueous solution and mixing the hydrogen peroxide water and the tantalum fluoride aqueous solution. Note that it is presumed that at least a part of the obtained tantalum compound aqueous solution forms a peroxo complex.

Here, a hydrogen peroxide concentration in the hydrogen peroxide water added to the tantalum fluoride aqueous solution is preferably 0.5 mass% to 35 mass%. Further, the hydrogen peroxide is preferably added so that a molar ratio H₂O₂/Ta of the hydrogen peroxide to the tantalum becomes 0.6 or higher and 1.5 or lower, and more preferably 0.7 or higher and 1.2 or lower because the hydrogen peroxide may be decomposed during the mixing.

In the reverse neutralization step of generating the tantalic acid-containing precipitate by adding the obtained tantalum compound aqueous solution to the alkaline aqueous solution, a precipitation slurry containing the tantalum is obtained by adding the tantalum compound aqueous solution to the alkaline aqueous solution, for example, the ammonia water, that is, by the reverse neutralization method. Then, by removing fluoride ions from the obtained precipitation slurry containing the tantalum, the tantalum-containing precipitate from which the fluoride ions have been removed is obtained.

An ammonia concentration in the ammonia water used for the reverse neutralization is preferably 10 mass% to 30 mass%. In a case where the ammonia concentration is 10 mass%, the tantalum is dissolved and no longer remains, and the tantalum and the tantalic acid can be completely dissolved in water. Meanwhile, the ammonia concentration is preferably 30 mass% or lower because the ammonia water is close to a saturated ammonia aqueous solution.

From such viewpoint, the ammonia concentration in the ammonia water is preferably 10 mass% or higher, more preferably 15 mass% or higher, still more preferably 20 mass% or higher, and particularly preferably 25 mass% or higher. Meanwhile, the ammonia concentration is preferably 30 mass% or lower, more preferably 29 mass% or lower, and still more preferably 28 mass% or lower.

In the reverse neutralization step, regarding an addition amount of the tantalum fluoride aqueous solution added to the ammonia water, a molar ratio NH₃/Ta is preferably 95 or higher and 500 or lower, more preferably 100 or higher and 450 or lower, and still more preferably 110 or higher and 400 or lower. Further, regarding the addition amount of the tantalum fluoride aqueous solution added to the ammonia water, a molar ratio NH₃/HF is preferably 3.0 or higher, more preferably 4.0 or higher, and still more preferably 5.0 or higher from a viewpoint of generating an amine or a tantalic acid compound soluble in a dilute ammonia water. Meanwhile, from a viewpoint of cost reduction, the molar ratio NH₃/HF is preferably 100 or lower, more preferably 50 or lower, and still more preferably 40 or lower.

In the reverse neutralization step, time required for adding the tantalum fluoride aqueous solution to the ammonia water is preferably 10 minutes or shorter, more preferably 8 minutes or shorter, and still more preferably 5 minutes or shorter. In other words, it is preferable that the tantalum fluoride aqueous solution is not gradually added over time, but is charged into the ammonia water in as short a time as possible, for example, charged at once, and subjected to a neutralization reaction. Further, in the reverse neutralization step, since an acidic tantalum fluoride aqueous solution is added to alkaline ammonia water, the neutralization reaction can be performed while maintaining a high pH. Note that the tantalum fluoride aqueous solution and the ammonia water can be used at a normal temperature.

Then, in the reverse neutralization step, by removing the fluoride ions from the precipitation slurry containing the tantalum obtained by the reverse neutralization method, the tantalum-containing precipitate from which the fluoride ions have been removed can be obtained. Since a fluorine compound such as ammonium fluoride is present as an impurity in the precipitation slurry containing the tantalum obtained by the reverse neutralization method, it is preferable to remove the fluorine compound.

Any method of removing the fluorine compound is possible, and for example, a method by filtration using a film such as reverse osmosis filtration, ultrafiltration, or microfiltration using the ammonia water or the pure water, centrifugation, or other known methods can be adopted. Note that, when the fluoride ions are removed from the precipitation slurry containing the tantalum, temperature adjustment is not particularly necessary, and it is possible to perform the removal at the normal temperature.

Specifically, the precipitation slurry containing the tantalum obtained by the reverse neutralization method is decanted using a centrifuge, and washing is repeated until an amount of the fluoride ions released is 100 mg/L or less, thereby obtaining the tantalum-containing precipitate from which the fluoride ions have been removed. Note that, by repeating the washing, the added hydrogen peroxide is also removed in the reaction step.

A cleaning liquid used for removing the fluoride ions is suitably the ammonia water. Specifically, the ammonia water is preferably 1 mass% or more and 35 mass% or less. With such ammonia water, the ammonia is suitable for the fluoride ions, and an unnecessary increase in cost can be avoided.

Further, the method of producing the tantalic acid compound dispersion of the present invention includes a step of mixing the tantalum-containing precipitate produced through the above-described reaction step and reverse neutralization step with the organic nitrogen compound.

The produced tantalum-containing precipitate from which the fluoride ions have been removed through the above-described reaction step and reverse neutralization step is diluted with the pure water or the like to obtain a tantalum-containing precipitation slurry from which the fluoride ions have been removed. Note that, regarding a tantalum concentration in the tantalum-containing precipitation slurry, a part of the tantalum-containing precipitation slurry is collected, dried at 110°C for 24 hours, and then fired at 1,000°C for 4 hours to produce Ta₂O₅. A weight of Ta₂O₅ thus generated is measured, and the tantalum concentration in the tantalum-containing precipitation slurry can be calculated from the weight.

Then, a mixture obtained by mixing the tantalum-containing precipitation slurry from which the fluoride ions have been removed, the organic nitrogen compound, and the pure water is kept at 5°C to 90°C for 0.1 hours to 48 hours while being stirred, thereby obtaining the tantalic acid compound dispersion of the present invention.

As described above, the organic nitrogen compound to be mixed with the tantalum-containing precipitation slurry is preferably the aliphatic amine, the aromatic amine, the amino alcohol, the amino acid, the polyamine, the quaternary ammonium, the guanidine compound, or the azole compound, and more preferably the aliphatic amine and or a quaternary ammonium compound.

From a viewpoint of solubility, the aliphatic amine is preferably mixed so that an aliphatic amine concentration in the tantalum-containing precipitation slurry becomes 40 mass% or lower, and more preferably 20 mass% or lower. Further, from the same viewpoint, the aliphatic amine is preferably mixed so that the aliphatic amine concentration in the tantalum-containing precipitation slurry becomes 0.1 mass% or higher, more preferably 1 mass% or higher, and may be 5 mass% or higher or 10 mass% or higher. Note that the aliphatic amine is more preferably the methylamine or the dimethylamine.

Further, from the viewpoint of solubility, the quaternary ammonium compound is preferably mixed so that a quaternary ammonium compound concentration in the tantalum-containing precipitation slurry becomes 40 mass% or lower, and more preferably 20 mass% or lower. Further, from the same viewpoint, the quaternary ammonium compound is preferably mixed so that the quaternary ammonium compound concentration in the tantalum-containing precipitation slurry becomes 0.1 mass% or higher, more preferably 1 mass% or higher, and may be 5 mass% or higher or 10 mass% or higher. Note that the quaternary ammonium compound is more preferably the tetramethylammonium hydroxide (TMAH) or tetraethylammonium hydroxide (TEAH).

Further, the method of producing the tantalic acid compound dispersion of the present invention includes a step of mixing the tantalic acid-containing precipitate produced through the above-described reaction step and reverse neutralization step with a hydroxide of an element M including one or more elements M selected from the group consisting of the alkali metal elements or the alkaline earth metal elements. Here, the hydroxide of the element M is preferably lithium hydroxide.

The produced tantalum-containing precipitate from which the fluoride ions have been removed through the above-described reaction step and reverse neutralization step is diluted with the pure water or the like to obtain a tantalum-containing precipitation slurry from which the fluoride ions have been removed. Then, a mixture obtained by mixing the tantalum-containing precipitation slurry from which the fluoride ions have been removed, the hydroxide of the element M, for example, a lithium hydroxide monohydrate, and the pure water is kept at 5°C to 100°C for 0.1 hours to 72 hours while being stirred, thereby obtaining the tantalic acid compound dispersion of the present invention. Moreover, in order to remove an ammonia component contained in the obtained tantalic acid compound dispersion of the present invention, the following concentration adjusting step may be performed. In the concentration adjusting step, for example, heating and stirring are performed at 60°C to 90°C for 1 hour to 100 hours, and then cooling is performed to the room temperature. Then, a solvent (the pure water or the like) is added to replenish the solvent (pure water or the like) evaporated. An addition amount of the solvent is adjusted so that the tantalic acid concentration in the tantalic acid compound dispersion after the ammonia component is removed matches the tantalic acid concentration in the tantalic acid compound dispersion before the ammonia component is removed.

Specifically, the tantalic acid compound dispersion of the present invention, that is, the lithium tantalate dispersion is obtained by mixing and stirring the obtained tantalum-containing precipitation slurry, the lithium hydroxide monohydrate, and the pure water so that the tantalic acid concentration in a final mixture becomes 0.1 mass% or higher and 15 mass% or lower in terms of Ta₂O₅ and the molar ratio Li/Ta of the lithium to the tantalum becomes 0.8 or higher and 1.5 or lower. Further, also in a case where the element M contained in the tantalic acid compound dispersion of the present invention is one element M selected from the alkali metal elements other than the lithium or the alkaline earth metal elements, a molar ratio M/Ta of the element M to the tantalum is preferably 0.8 or higher and 1.5 or lower, more preferably 0.8 or higher and 1.3 or lower, still more preferably 0.9 or higher and 1.2 or lower, and particularly preferably 0.9 or higher and 1.1 or lower. Moreover, even in a case where the element M contained in the tantalic acid compound dispersion of the present invention is more than one, the molar ratio M/Ta of the element M to the tantalum is preferably 0.8 or higher and 1.5 or lower, more preferably 0.8 or higher and 1.3 or lower, still more preferably 0.9 or higher and 1.2 or lower, and particularly preferably 0.9 or higher and 1.1 or lower. Specifically, there are included a case where the element M is more than one of the alkali metal elements in addition to the lithium and the alkaline earth metal elements, and a case where the element M is more than one selected from the alkali metal elements other than the lithium and the alkaline earth metal.

Next, the method of producing the tantalic acid compound powder containing the tantalic acid compound in the tantalic acid compound dispersion of the present invention will be described below.

In a method of producing a dried powder of the tantalic acid compound besides the tantalic acid compound powder, the tantalic acid compound dispersion obtained by the above-described method of producing the tantalic acid compound dispersion of the present invention is placed in a stationary furnace, and dried, for example, dried under vacuum, at a heating temperature of about 60°C to 200°C for 1 hour to 72 hours, whereby water of the tantalic acid compound dispersion of the present invention is evaporated, and the dried powder of the tantalic acid compound containing crystal particles of the tantalic acid compound contained in the tantalic acid compound dispersion of the present invention is obtained.

Meanwhile, in a method of producing a fired powder of the tantalic acid compound, as described above, the tantalic acid compound dispersion of the present invention is dried under vacuum, and the obtained dried powder of the tantalic acid compound is placed in the stationary furnace and fired at a firing temperature of 300°C or higher and 1,200°C or lower for a firing time of 1 hour or longer and 72 hours or shorter in air, whereby the fired powder of the tantalic acid compound is obtained.

Note that a powder obtained by pulverizing the above-described dried powder and fired powder of the tantalic acid compound may be used as the tantalic acid compound powder. Further, regardless of the pulverization, undersize particles (fine particles) may be used as the tantalic acid compound powder, the undersize particles being obtained by classifying a plurality of the above-described dried powders and fired powders of the tantalic acid compound with a sieve or the like. Oversize particles (coarse particles) may be pulverized again, classified, and used. Note that it is also possible to use a vibrating sieve into which iron balls coated with nylon or fluororesin, or the like is put as a pulverizing medium to perform both the pulverization and the classification. By performing both the classification and the pulverization as described above, the tantalic acid compound powder can also be removed even in an excessively large size. Specifically, in a case where the classification is performed using a sieve, it is preferable to use a sieve having a mesh size of 150 µm to 1,000 µm. In a case where the mesh size is 150 µm to 1,000 µm, a ratio of the oversize particles does not become too large, the pulverization is not repeated again, and a plurality of the tantalic acid compound powders in which the undersize particles need to be pulverized again are not classified.

The tantalic acid compound powder thus obtained is mixed with water or the organic solvent as a dispersion medium, and wet-pulverized using a medium such as beads, whereby a tantalic acid compound powder dispersion can be obtained. Here, examples of the organic solvent used as the dispersion medium include alcohols, esters, ketones, aromatic hydrocarbons, aliphatic hydrocarbons, ethers, and mixed solvents thereof. Moreover, in order to improve a film formability of the tantalic acid compound film using the tantalic acid compound powder dispersion, a binder such as a resin component may be added. Examples of the resin component used as the binder include an acrylic resin, polyurethane, an epoxy resin, polystyrene, polycarbonate, a glycol-based resin, a cellulose-based resin, and a mixed resin and a copolymer resin thereof.

Moreover, a method of producing the tantalic acid compound film containing the tantalic acid compound in the tantalic acid compound dispersion of the present invention will be described below.

A method of producing a dried tantalic acid compound film besides the tantalic acid compound film includes: an application step of applying the tantalic acid compound dispersion on the surface of the substrate; and a film drying step of drying the tantalic acid compound dispersion applied to the surface of the substrate to obtain the dried film.

Specifically, the tantalic acid compound dispersion obtained by the above-described method of producing the tantalic acid compound dispersion of the present invention is dropped onto the surface of the substrate using a syringe while being filtered with, for example, a filter having a pore diameter of 1 µm, and applied by spin coating (1,500 rpm, 30 sec) if necessary. Next, the dried tantalic acid compound film is formed on the surface of the substrate by drying the dispersion at 110°C for 30 minutes.

A method of producing a fired tantalic acid compound film besides the tantalic acid compound film includes: an application step of applying the tantalic acid compound dispersion to the surface of the substrate; a film drying step of drying the tantalic acid compound dispersion applied to the surface of the substrate in air or under vacuum to obtain a dried film; and a film firing step of firing the dried film in air at a firing temperature of 300°C or higher and 1,200°C or lower for a firing time of 1 hour or longer and 12 hours or shorter to obtain a fired film.

Specifically, as described above, the substrate on which the dried tantalic acid compound film obtained by applying the tantalic acid compound dispersion to the surface of the substrate and drying the tantalic acid compound dispersion is formed is placed in the stationary furnace, and fired in air at a firing temperature of 300°C or higher and 1,200°C or lower for a firing time of 1 hour or longer and 12 hours or shorter to form the fired tantalic acid compound film on the surface of the substrate.

Moreover, a method of producing the positive electrode active material for the lithium ion secondary battery covered with the above-described tantalic acid compound dispersion of the present invention will be described below.

The method of producing the positive electrode active material for the lithium ion secondary battery covered with the tantalic acid compound dispersion of the present invention includes a step of mixing the tantalic acid compound dispersion of the present invention, the positive electrode active material, and a lithium hydroxide aqueous solution if necessary to generate a slurry of the positive electrode active material for the battery containing the tantalic acid compound; and a step of drying the slurry of the positive electrode active material for the battery containing the tantalic acid compound.

First, the positive electrode active material for the battery, for example, LiMn₂O₄ (manufactured by Merck KGaA, spinel type, particle diameter < 0.5 µm) is added to a lithium tantalate dispersion obtained by diluting the lithium tantalate dispersion, which is the tantalic acid compound dispersion of the present invention, with the pure water to obtain a slurry containing the lithium tantalate. Then, the lithium hydroxide aqueous solution is dropped while stirring the slurry containing the lithium tantalate, and held at 90°C for 10 minutes, whereby the slurry of the positive electrode active material for the battery containing the lithium tantalate is generated.

In addition to LiMn₂O₄ described above, LiCoO₂, LiNiO₂, LiFeO₂, Li₂MnO₃, LiFePO₄, LiCoPO₄, LiNiPO₄, LiMnPO₄, LiNi_{0.5}Mn_{1.5}O₄, LiMn_{1/3}Co_{1/3}Ni_{1/3}O₂, LiCo_{0.2}Ni_{0.4}Mn_{0.4}O₂, lithium molybdate, LiMnO₄, LiNi_{0.8}Co_{0.15}Al_{0.05}O₂, LiMnO₂, and the like can be used as the positive electrode active material for the battery.

Next, the positive electrode active material for the lithium ion secondary battery covered with the lithium tantalate can be produced by holding the slurry of the positive electrode active material for the battery containing the lithium tantalate at a furnace temperature of 110°C and drying the slurry in an air drying furnace for 15 hours. Note that, as the method of producing the positive electrode active material for the lithium ion secondary battery covered with the tantalic acid compound dispersion of the present invention, an immersion method, a spray method, a fluidized bed method, a circulating fluidized bed method, a rolling fluidized bed method, a coprecipitation method, or the like may also be used in addition to the above-described production method.

In the above-described positive electrode active material for the lithium ion secondary battery covered with the lithium tantalate dispersion, the lithium tantalate dispersion of the present invention is used, and one may be used, which is obtained by dispersing the dried powder obtained by drying the lithium tantalate dispersion of the present invention or the fired powder obtained by drying and firing the lithium tantalate dispersion of the present invention in the dispersion medium.

Note that, in the above-described method of producing the positive electrode active material for the lithium ion secondary battery, the positive electrode active material for the battery is added, and may be appropriately changed according to use. For example, a dispersant, a pH adjusting agent, a colorant, a thickener, a wetting agent, a binder resin, or the like may also be added.

In the above-described method of producing the positive electrode active material for the lithium ion secondary battery, the lithium tantalate dispersion of the present invention is used, and the lithium tantalate dispersion may be replaced with the tantalic acid compound dispersion of the present invention containing the organic nitrogen compound, and the positive electrode active material for the lithium ion secondary battery covered with the tantalic acid can be produced through a similar step.

Accordingly, surfaces of positive electrode active material particles for the lithium ion secondary battery is covered with the tantalic acid compound dispersion of the present invention, whereby it is possible to reduce interface resistance generated between the positive electrode and the electrolyte of the lithium ion secondary battery including the positive electrode active material particles of the secondary battery.

Moreover, for a purpose of reducing the interface resistance generated between the positive electrode and the electrolyte of the lithium ion secondary battery including the positive electrode active material particles of the secondary battery, the surfaces of the positive electrode active material particles for the lithium ion secondary battery may be covered with the tantalic acid compound dispersion obtained by mixing the tantalic acid compound dispersion of the present invention with a niobate compound, for example, the lithium niobate or a niobic acid. Note that the particle diameter (D50) of the tantalic acid compound and a particle diameter (D50) of the niobate compound in the tantalic acid compound dispersion obtained by mixing the tantalic acid compound dispersion of the present invention with the niobate compound as determined by the dynamic light scattering method are preferably 100 nm or smaller.

Note that, in the present description, the expression "X to Y" (X and Y may be any number) also includes a meaning of "preferably more than X" or "preferably less than Y" as well as a meaning of "X or more and Y or less" unless otherwise specified. Further, the expression "X or more" (X may be any number) or "Y or less" (Y may be any number) also includes an intention of "preferably more than X" or "preferably less than Y".

### Advantageous Effects of Invention

The tantalic acid compound dispersion of the present invention has high dispersibility in the polar solvent, particularly water, has good solubility in water, and is excellent in storage stability.

### Best Mode for Carrying Out the Invention

Hereinafter, the tantalic acid compound dispersion according to an embodiment of the present invention will be further described with reference to the following examples. However, the following examples do not limit the present invention.

### (Example 1)

In 120 g of a 55 mass% hydrofluoric acid aqueous solution, 137.9 g of tantalum hydroxide (Ta₂O₅ concentration of 66 mass%) manufactured by Mitsui Mining & Smelting Co., Ltd. was dissolved, and 849 mL of ion-exchanged water was added to obtain a tantalum fluoride aqueous solution (Ta₂O₅ concentration of 8.2 mass%).

To 1,000 g of this tantalum fluoride aqueous solution, 27.5 g of the hydrogen peroxide water (H₂O₂ concentration of 35 mass%) was added (molar ratio H₂O₂/Ta = 0.76) and stirred for 5 minutes to obtain a tantalum compound aqueous solution.

To 6.82 L of the ammonia water (NH₃ concentration of 25 mass%), 1,000 g of this tantalum compound aqueous solution was added in less than 10 minutes (molar ratio NH₃/Ta = 245, and molar ratio NH₃/HF = 30.7) to obtain a reaction liquid (pH 11). This reaction liquid was a slurry of the tantalic acid compound hydrate, that is, a slurry of the tantalum-containing precipitate.

Next, this reaction liquid was decanted using a centrifuge and washed until the amount of the fluoride ions released reached 100 mg/L or less to obtain the tantalum-containing precipitate from which the fluoride ions had been removed. At this time, the ammonia water was used as the cleaning liquid.

Moreover, the tantalum-containing precipitate from which the fluoride ions had been removed was diluted with the pure water to obtain the tantalum-containing precipitation slurry. A part of the tantalum-containing precipitation slurry was dried at 110°C for 24 hours and then fired at 1,000°C for 4 hours to produce Ta₂O₅, and the Ta₂O₅ concentration contained in the tantalum-containing precipitation slurry was calculated from a weight of Ta₂O₅.

Then, the tantalum-containing precipitation slurry diluted with the pure water, 5 mass% of the dimethylamine as the organic nitrogen compound, and the pure water were mixed so that a tantalum concentration in a final mixture became 5 mass% in terms of Ta₂O₅ and a weight ratio of Ta₂O₅ to the organic nitrogen compound became 1.0, thereby obtaining a tantalic acid compound dispersion according to Example 1. A pH of the tantalic acid compound dispersion according to Example 1 was 12.0.

### (Example 2)

In Example 2, a tantalic acid compound dispersion according to Example 2 was obtained by performing a similar production method as in Example 1 except that the organic nitrogen compound to be mixed with the tantalum-containing precipitation slurry diluted with the pure water was 20 mass% of the methylamine and the weight ratio of Ta₂O₅ to the organic nitrogen compound was 4.0. A pH of the tantalic acid compound dispersion according to Example 2 was 12.9.

### (Example 3)

In Example 3, a tantalic acid compound dispersion according to Example 3 was obtained by performing a similar production method as in Example 1 except that the organic nitrogen compound to be mixed with the tantalum-containing precipitation slurry diluted with the pure water was 5 mass% of the tetramethylammonium hydroxide (TMAH). A pH of the tantalic acid compound dispersion according to Example 3 was 13.3.

### (Example 4)

In Example 4, a tantalic acid compound dispersion according to Example 4 was obtained by performing a similar production method as in Example 1 except that the organic nitrogen compound to be mixed with the tantalum-containing precipitation slurry diluted with the pure water was 1 mass% of the dimethylamine and the tantalum concentration in the final mixture was 1 mass% in terms of Ta₂O₅. A pH of the tantalic acid compound dispersion according to Example 4 was 11.4.

### (Example 5)

In Example 5, a tantalic acid compound dispersion according to Example 5 was obtained by performing a similar production method as in Example 1 except that the organic nitrogen compound to be mixed with the tantalum-containing precipitation slurry diluted with the pure water was 10 mass% of the dimethylamine and the tantalum concentration in the final mixture was 10 mass% in terms of Ta₂O₅. A pH of the tantalic acid compound dispersion according to Example 5 was 12.2.

### (Example 6)

In Example 6, a tantalic acid compound dispersion according to Example 6 was obtained by performing a similar production method as in Example 1 except that the organic nitrogen compound to be mixed with the tantalum-containing precipitation slurry diluted with the pure water was 10 mass% of the tetramethylammonium hydroxide (TMAH) and the tantalum concentration in the final mixture was 10 mass% in terms of Ta₂O₅. A pH of the tantalic acid compound dispersion according to Example 6 was 13.9.

### (Example 7)

In Example 7, a tantalic acid compound dispersion according to Example 7 was obtained by performing a similar production method as in Example 1 except that the hydrogen peroxide water (H₂O₂ concentration of 35 mass%) was added to the tantalum fluoride aqueous solution so that the molar ratio H₂O₂/Ta became 0.9. A pH of the tantalic acid compound dispersion according to Example 7 was 11.9.

### (Example 8)

In Example 8, a tantalic acid compound dispersion according to Example 8 was obtained by performing a similar production method as in Example 1 except that the hydrogen peroxide water (H₂O₂ concentration of 35 mass%) was added to the tantalum fluoride aqueous solution so that the molar ratio H₂O₂/Ta became 0.70. A pH of the tantalic acid compound dispersion according to Example 8 was 12.0.

### (Example 9)

In Example 9, a tantalic acid compound dispersion according to Example 9 was obtained by performing a similar production method as in Example 1 except that the organic nitrogen compound to be mixed with the tantalum-containing precipitation slurry diluted with the pure water was 20 mass% of the dimethylamine, the tantalum concentration in the final mixture was 12 mass% in terms of Ta₂O₅, and the weight ratio of Ta₂O₅ to the organic nitrogen compound was 1.7. A pH of the tantalic acid compound dispersion according to Example 9 was 12.5.

### (Example 10)

In Example 10, a tantalic acid compound dispersion according to Example 10 was obtained by performing a similar production method as in Example 1 except that the organic nitrogen compound to be mixed with the tantalum-containing precipitation slurry diluted with the pure water was 12 mass% of the tetramethylammonium hydroxide (TMAH), the tantalum concentration in the final mixture was 20 mass% in terms of Ta₂O₅, and the weight ratio of Ta₂O₅ to the organic nitrogen compound of the final mixture was 0.6. A pH of the tantalic acid compound dispersion according to Example 10 was 14.1.

### (Example 11)

In Example 11, a tantalic acid compound dispersion according to Example 11 was obtained by performing a similar production method as in Example 1 except that the organic nitrogen compound to be mixed with the tantalum-containing precipitation slurry diluted with the pure water was 4 mass% of the dimethylamine and the weight ratio of Ta₂O₅ to the organic nitrogen compound in the final mixture was 0.8. A pH of the tantalic acid compound dispersion according to Example 11 was 11.8.

### (Example 12)

In Example 12, a tantalic acid compound dispersion according to Example 12 was obtained by performing a similar production method as in Example 1 except that the organic nitrogen compound to be mixed with the tantalum-containing precipitation slurry diluted with the pure water was 40 mass% of the dimethylamine, the tantalum concentration in the final mixture was 1 mass% in terms of Ta₂O₅, and the weight ratio of Ta₂O₅ to the organic nitrogen compound was 40.0. A pH of the tantalic acid compound dispersion according to Example 12 was 13.4.

### (Example 13)

In Example 13, a tantalic acid compound dispersion according to Example 13 was obtained by performing a similar production method as in Example 1 except that the organic nitrogen compound to be mixed with the tantalum-containing precipitation slurry diluted with the pure water was 35 mass% of the dimethylamine and the weight ratio of Ta₂O₅ to the organic nitrogen compound in the final mixture was 7.0. A pH of the tantalic acid compound dispersion according to Example 13 was 13.0.

### (Example 14)

In Example 14, a tantalic acid compound dispersion according to Example 14 was obtained by performing a similar production method as in Example 1 except that the organic nitrogen compound to be mixed with the tantalum-containing precipitation slurry diluted with the pure water was a mixture of three kinds of organic nitrogen compounds: 4 mass% of the dimethylamine, 0.5 mass% of the methylamine, and 0.5 mass% of the tetramethylammonium hydroxide (TMAH), and the weight ratio of Ta₂O₅ to the organic nitrogen compound of the final mixture was 0.8, 0.1, and 0.1, respectively. A pH of the tantalic acid compound dispersion according to Example 14 was 12.1.

### (Comparative Example 1)

In Comparative Example 1, a tantalic acid compound dispersion according to Comparative Example 1 was obtained by performing a similar production method as in Example 1 except that the organic nitrogen compound to be mixed with the tantalum-containing precipitation slurry diluted with the pure water was 30 mass% of the dimethylamine and the tantalum concentration in the final mixture was 30 mass% in terms of Ta₂O₅. A pH of the tantalic acid compound dispersion according to Comparative Example 1 was 12.7.

### (Comparative Example 2)

In Comparative Example 2, a tantalic acid compound dispersion according to Comparative Example 2 was obtained by performing a similar production method as in Example 1 except that the hydrogen peroxide water was not added to the tantalum fluoride aqueous solution and the weight ratio of Ta₂O₅ to the organic nitrogen compound of the final mixture was 1.0. A pH of the tantalic acid compound dispersion according to Comparative Example 2 was 12.0.

### (Comparative Example 3)

In Comparative Example 3, a tantalic acid compound dispersion according to Comparative Example 3 was obtained by performing a similar production method as in Example 1 except that the hydrogen peroxide water was not added to the tantalum fluoride aqueous solution and the organic nitrogen compound was not added to the tantalum-containing precipitation slurry diluted with the pure water. A pH of the tantalic acid compound dispersion according to Comparative Example 3 was 10.7.

### (Comparative Example 4)

A tantalic acid compound dispersion according to Comparative Example 4 was produced as follows.

In 120 g of the 55 mass% hydrofluoric acid aqueous solution, 137.9 g of the tantalum hydroxide (Ta₂O₅ concentration of 66 mass%) manufactured by Mitsui Mining & Smelting Co., Ltd. was dissolved, and 849 mL of the ion-exchanged water was added to obtain the tantalum fluoride aqueous solution (Ta₂O₅ concentration of 8.2 mass%).

To 100 mL of 50 mass% dimethylamine, 100 g of this tantalum fluoride aqueous solution was added in less than 10 minutes. Then, the mixture thereof was stirred for 15 minutes to obtain a primary reaction liquid (pH 11). This primary reaction liquid was added to 2 L of the ammonia water (NH₃ concentration of 25 mass%) in less than 10 minutes to obtain a secondary reaction liquid (pH 11). This secondary reaction liquid was the slurry of the tantalic acid compound hydrate, that is, the slurry of the tantalum-containing precipitate.

Next, this secondary reaction liquid was decanted using the centrifuge and washed until the amount of the fluoride ions released reached 100 mg/L or less to obtain the tantalum-containing precipitate from which the fluoride ions had been removed. At this time, the ammonia water was used as the cleaning liquid.

Moreover, the tantalum-containing precipitate from which the fluoride ions had been removed was diluted with the pure water to obtain the tantalum-containing precipitation slurry. A part of the tantalum-containing precipitation slurry was dried at 110°C for 24 hours and then fired at 1,000°C for 4 hours to produce Ta₂O₅, and the Ta₂O₅ concentration contained in the tantalum-containing precipitation slurry was calculated from a weight of Ta₂O₅.

Then, the tantalum-containing precipitation slurry diluted with the pure water, 5 mass% of the dimethylamine as the organic nitrogen compound, and the pure water were mixed so that a tantalum concentration in a final mixture became 5 mass% in terms of Ta₂O₅ and the weight ratio of Ta₂O₅ to the organic nitrogen compound became 1.0, thereby obtaining a tantalic acid compound dispersion according to Comparative Example 4. A pH of the tantalic acid compound dispersion according to Comparative Example 4 was 12.0.

### (Comparative Example 5)

In Comparative Example 5, a tantalic acid compound dispersion according to Comparative Example 5 was obtained by performing a similar production method as in Comparative Example 4 except that the organic nitrogen compound to be mixed with the tantalum-containing precipitation slurry diluted with the pure water was 10 mass% of the dimethylamine, the tantalum concentration in the final mixture was 10 mass% in terms of Ta₂O₅ and. A pH of the tantalic acid compound dispersion according to Comparative Example 5 was 12.1.

### (Example 15)

A tantalic acid compound dispersion according to Example 15 was produced as follows.

In 120 g of the 55 mass% hydrofluoric acid aqueous solution, 137.9 g of the tantalum hydroxide (Ta₂O₅ concentration of 66 mass%) manufactured by Mitsui Mining & Smelting Co., Ltd. was dissolved, and 849 mL of the ion-exchanged water was added to obtain the tantalum fluoride aqueous solution (Ta₂O₅ concentration of 8.2 mass%).

To 1,000 g of this tantalum fluoride aqueous solution, 36.1 g of the hydrogen peroxide water (H₂O₂ concentration of 35 mass%) was added (molar ratio H₂O₂/Ta = 1.0) and stirred for 5 minutes to obtain a tantalum compound aqueous solution.

To 6.82 L of the ammonia water (NH₃ concentration of 25 mass%), 1,000 g of this tantalum compound aqueous solution was added in less than 1 minute (molar ratio NH₃/Ta = 245, and molar ratio NH₃/HF = 30.7) to obtain a reaction liquid (pH 11). This reaction liquid was a slurry of the tantalic acid compound hydrate, that is, a slurry of the tantalum-containing precipitate.

Next, this reaction liquid was decanted using a centrifuge and washed until the amount of the fluoride ions released reached 100 mg/L or less to obtain the tantalum-containing precipitate from which the fluoride ions had been removed. At this time, the ammonia water was used as the cleaning liquid.

Moreover, the tantalum-containing precipitate from which the fluoride ions had been removed was diluted with the pure water to obtain the tantalum-containing precipitation slurry. A part of the tantalum-containing precipitation slurry was dried at 110°C for 24 hours and then fired at 1,000°C for 4 hours to produce Ta₂O₅, and the Ta₂O₅ concentration contained in the tantalum-containing precipitation slurry was calculated from a weight of Ta₂O₅.

Then, the tantalum-containing precipitation slurry diluted with the pure water, 0.54 mass% of the lithium hydroxide, and the pure water were mixed so that the tantalum concentration in the final mixture became 5 mass% in terms of Ta₂O₅ and the molar ratio Li/Ta became 1.0, thereby obtaining a tantalic acid compound dispersion according to Example 15. The tantalic acid compound dispersion according to Example 15 had a pH of 12.2 and an ammonia concentration of 0.7 mass%.

### (Example 16)

In Example 16, a tantalic acid compound dispersion according to Example 16 was obtained by performing a similar production method as in Example 15 except that the tantalum concentration in the final mixture was 1 mass% in terms of Ta₂O₅. The tantalic acid compound dispersion according to Example 16 had a pH of 11.9 and an ammonia concentration of 0.2 mass%.

### (Example 17)

In Example 17, a tantalic acid compound dispersion according to Example 17 was obtained by performing a similar production method as in Example 15 except that the tantalum concentration in the final mixture was 10 mass% in terms of Ta₂O₅. The tantalic acid compound dispersion according to Example 17 had a pH of 12.3 and an ammonia concentration of 1.5 mass%.

### (Example 18)

In Example 18, a tantalic acid compound dispersion according to Example 18 was obtained by performing a similar production method as in Example 15 except that the molar ratio Li/Ta of the final mixture was 0.8. The tantalic acid compound dispersion according to Example 18 had a pH of 12.0 and an ammonia concentration of 0.7 mass%.

### (Example 19)

In Example 19, a tantalic acid compound dispersion according to Example 19 was obtained by performing a similar production method as in Example 15 except that the molar ratio Li/Ta of the final mixture was 1.5. The tantalic acid compound dispersion according to Example 19 had a pH of 12.4 and an ammonia concentration of 0.7 mass%.

### (Example 20)

In Example 20, the tantalic acid compound dispersion obtained in Example 15 was heated to 70°C in a water bath, held for 10 hours while being stirred, and then cooled to the room temperature. In order to replenish the water that had been evaporated by this heating, the pure water was added, and concentration adjustment was performed so that the tantalum concentration became 5 mass% in terms of Ta₂O₅, thereby obtaining a tantalic acid compound dispersion according to Example 20. The tantalic acid compound dispersion according to Example 20 had a pH of 11.8 and an ammonia concentration of 0.02 mass%.

### (Example 21)

In Example 21, the tantalic acid compound dispersion obtained in Example 15 was heated to 80°C in the water bath, held for 10 hours while being stirred, and then cooled to the room temperature. In order to replenish the water that had been evaporated by this heating, the pure water was added, and the concentration adjustment was performed so that the tantalum concentration became 5 mass% in terms of Ta₂O₅, thereby obtaining a tantalic acid compound dispersion according to Example 20. The tantalic acid compound dispersion according to Example 21 had a pH of 11.7 and an ammonia concentration of 0.006 mass%.

### (Comparative Example 6)

In Comparative Example 6, a tantalic acid compound dispersion according to Comparative Example 6 was obtained by performing a similar production method as in Example 15 except that the tantalum concentration in the final mixture was 15 mass% in terms of Ta₂O₅. A pH of the tantalic acid compound dispersion according to Comparative Example 6 was unmeasurable.

### (Comparative Example 7)

A tantalic acid compound dispersion according to Comparative Example 7 was produced as follows.

To 137.9 g of the tantalum hydroxide manufactured by Mitsui Mining & Smelting Co., Ltd. (Ta₂O₅ concentration of 66 mass%), 1,824 g of the pure water and 1,285 g of the hydrogen peroxide water (H₂O₂ concentration of 35 mass%) were added (molar ratio H₂O₂/Ta = 32.1), and stirred for 0.5 hours to obtain a tantalum-containing dispersion.

Next, 3,246.9 g of this tantalum-containing dispersion was added to 168.4 mL of the ammonia water (NH₃ concentration of 25 mass%) in less than 10 minutes (molar ratio NH₃/Ta = 6.0) to obtain a reaction liquid (pH 11).

Then, this reaction liquid and 0.289 mass% of the lithium hydroxide were mixed so that the tantalum concentration in the final mixture became 2.7 mass% in terms of Ta₂O₅ and the molar ratio Li/Ta became 1.0, thereby obtaining a tantalic acid compound dispersion according to Comparative Example 7. A pH of the tantalic acid compound dispersion according to Comparative Example 7 was 12.1.

### (Comparative Example 8)

In Comparative Example 8, a tantalic acid compound dispersion according to Comparative Example 8 was obtained by performing a similar production method as in Comparative Example 7 except that the hydrogen peroxide water was added to the tantalum hydroxide so that the molar ratio H₂O₂/Ta became 1.0. A pH of the tantalic acid compound dispersion according to Comparative Example 8 was 12.1.

### (Comparative Example 9)

In Comparative Example 9, a tantalic acid compound dispersion according to Comparative Example 9 was obtained by performing a similar production method as in Example 15 except that the hydrogen peroxide water was not added to the tantalum fluoride aqueous solution. A pH of the tantalic acid compound dispersion according to Comparative Example 9 was 12.2.

### (Comparative Example 10)

A tantalic acid compound dispersion according to Comparative Example 10 was produced as follows.

In 120 g of the 55 mass% hydrofluoric acid aqueous solution, 137.9 g of the tantalum hydroxide (Ta₂O₅ concentration of 66 mass%) manufactured by Mitsui Mining & Smelting Co., Ltd. was dissolved, and 849 mL of the ion-exchanged water was added to obtain the tantalum fluoride aqueous solution (Ta₂O₅ concentration of 8.2 mass%).

To 100 mL of the 50 mass% dimethylamine, 100 g of this tantalum fluoride aqueous solution was added in less than 10 minutes. Then, the mixture thereof was stirred for 15 minutes to obtain a primary reaction liquid (pH 11). This primary reaction liquid was added to 2 L of the ammonia water (NH₃ concentration of 25 mass%) in less than 10 minutes to obtain a secondary reaction liquid (pH 11). This secondary reaction liquid was the slurry of the tantalic acid compound hydrate, that is, the slurry of the tantalum-containing precipitate.

Next, this secondary reaction liquid was decanted using the centrifuge and washed until the amount of the fluoride ions released reached 100 mg/L or less to obtain the tantalum-containing precipitate from which the fluoride ions had been removed. At this time, the ammonia water was used as the cleaning liquid.

Moreover, the tantalum-containing precipitate from which the fluoride ions had been removed was diluted with the pure water to obtain the tantalum-containing precipitation slurry. A part of the tantalum-containing precipitation slurry was dried at 110°C for 24 hours and then fired at 1,000°C for 4 hours to produce Ta₂O₅, and the Ta₂O₅ concentration contained in the tantalum-containing precipitation slurry was calculated from a weight of Ta₂O₅.

Then, the tantalum-containing precipitation slurry diluted with the pure water, 0.54 mass% of the lithium hydroxide, and the pure water were mixed so that the tantalum concentration in the final mixture became 5 mass% in terms of Ta₂O₅ and the molar ratio Li/Ta became 1.0, thereby obtaining a tantalic acid compound dispersion according to Comparative Example 10. A pH of the tantalic acid compound dispersion according to Comparative Example 10 was 12.2.

Then, the following physical properties were measured for each of the tantalic acid compound dispersions of Examples 1 to 21 and Comparative Examples 1 to 10. Hereinafter, physical property values measured and a method of measuring the physical property values are shown, and measurement results of the tantalic acid compound dispersions of Examples 1 to 10 and Comparative Examples 1 to 5 are shown in Table 1, and measurement results of the tantalic acid compound dispersions of Examples 15 to 21 and Comparative Examples 6 to 10 are shown in Table 2.

### <Element analysis>

A sample was appropriately diluted with a dilute hydrochloric acid if necessary, and the Ta weight fraction in terms of Ta₂O₅ was measured for each of the tantalic acid compound dispersions according to Examples 1 to 14 and Comparative Examples 1 to 5 and the Ta weight fraction in terms of Ta₂O₅ or the Li weight fraction in terms of Li was measured for each of the tantalic acid compound dispersions according to Examples 15 to 21 and Comparative Examples 6 to 10 in accordance with JIS K0116:2014 using ICP emission spectrometry (AG-5110 manufactured by Agilent Technologies).

### <Ammonia quantitative analysis>

To 1 to 5 ml of the sample solution, 25 ml of a sodium hydroxide solution (30 g/100 ml) was added, the mixed solution was boiled and distilled, and the distilled liquid (about 200 ml) was flowed out into a container containing 20 ml of the pure water and 0.5 ml of a sulfuric acid to separate the ammonia. Next, the separated ammonia was transferred to a 250 ml measuring flask, and a volume of the ammonia was adjusted to 250 ml with the pure water. Moreover, 10 ml of the solution whose volume was adjusted to 250 ml was collected in a 100 ml measuring flask, 1 ml of the sodium hydroxide solution (30 g/100 mL) was added to the collected solution, and a volume of the mixed solution was adjusted to 100 ml with the pure water. The thus obtained solution was quantitatively analyzed using the ion meter (body: HORIBA F-53, Electrode: HORIBA 500 2A) to measure the ammonia concentration (mass%) contained in each of the tantalic acid compound dispersions according to Examples 15 to 21.

### <Measurement of pH>

In each of the tantalic acid compound dispersions according to Examples 1 to 21 and Comparative Examples 1 to 10, an electrode (manufactured by HORIBA, Ltd.: standard ToupH electrode 9615S-10D) of a pH meter (manufactured by HORIBA, Ltd.: glass electrode type hydrogen ion concentration indicator D-51) was used to measure the pH after the liquid temperature was confirmed to be stabilized at 25°C.

### <Dynamic light scattering method>

The particle size distribution was evaluated by the dynamic light scattering method in accordance with JIS Z 8828:2019 using a zeta potential/particle diameter/molecular weight measurement system (ELSZ-2000 manufactured by Otsuka Electronics Co., Ltd.). Further, in order to remove dust and the like in each of the tantalic acid compound dispersions according to Examples 1 to 21 and Comparative Examples 1 to 10 to be measured immediately before the measurement, the dispersion was filtered with a filter having a pore size of 1 µm to perform filtering. Then, the ultrasonic treatment was performed at 28 kHz for 3 minutes using the ultrasonic cleaner (VS-100III manufactured by AS ONE CORPORATION), and dispersion treatment using ultrasonic waves was performed. Moreover, D50 represents a particle diameter up to 50% in terms of volume fraction. "Initial particle diameter D50 (nm)" in Table 1 refers to the particle diameter (D50) of the tantalic acid compound in the tantalic acid compound dispersion immediately after being generated. Further, "time-dependent particle diameter D50 (nm)" in Table 1 refers to the particle diameter (D50) of the tantalic acid compound in the tantalic acid compound dispersion after being left to stand for 1 month in a thermostat set at a room temperature of 25°C. Then, the measured "initial particle diameter D50 (nm)" and "time-dependent particle diameter D50 (nm)" were evaluated according to evaluation criteria "A", "B", "C", or "D". The evaluation criterion "A" indicates that "D50 ≤ 10 nm" is satisfied. The evaluation criterion "B" indicates that "10 nm < D50 ≤ 50 nm" is satisfied. The evaluation criterion "C" indicates that "50 nm < D50 ≤ 100 nm" is satisfied. The evaluation criterion "D" indicates that "100 nm < D50" is satisfied. Note that the filtering described above was not performed during the measurement of "time-dependent particle diameter D50 (nm)" but was performed during the measurement of "initial particle diameter D50 (nm)", and only the ultrasonic treatment was performed.

### <Time-dependent stability test>

Each of the tantalic acid compound dispersions according to Examples 1 to 21 and Comparative Examples 1 to 10 was left to stand for 1 month in the thermostat set at the room temperature of 25°C, and then presence or absence of white precipitation or gel was visually observed. The dispersions in which no white precipitation or gelation was observed were evaluated as "O" as having time-dependent stability, and the dispersions in each of which even one white precipitation or gel was observed were evaluated as "X" as having no time-dependent stability. Here, in determination of the gelling, each of the tantalic acid compound dispersions was placed in a plastic container, and when the container was turned upside down, it was determined that the dispersion that did not fall quickly was gelled. Further, the time-dependent particle diameter (D50) of the tantalic acid compound in each of the tantalic acid compound dispersions of Examples 1 to 21 and Comparative Examples 1 to 10 after standing for 1 month was measured using the dynamic light scattering method described above.

### <Film formability test>

Appearance evaluation of a coating film formed on a surface of the glass substrate as the substitute for the current collector plate was performed by observing the coating film with the optical microscope. Each of the tantalic acid compound dispersions according to Examples 1 to 21 and Comparative Examples 1 to 10 was degreased and washed with acetone using a syringe while being filtered with a filter having a pore diameter of 2 µm, then dropped onto a dried 50 mm × 50 mm glass substrate, and applied by spin coating (1,500 rpm, 15 sec). Then, an applied portion was naturally dried to form a coating film on the glass substrate. The glass substrate was observed with the optical microscope (magnification: 40x) in a range of 15 mm × 15 mm at a center of the formed coating film. If no bubbles, coating unevenness or cracks were observed, the dispersions were evaluated as "∘" as having excellent film formability, and if even one bubble, coating unevenness or crack was observed, the dispersions were evaluated as "×" as having no excellent film formability.

**[Table 1]**

| | **Substance specification** | | | | | | | **Liqud/coating film evaluation** | | | |
|---|---|---|---|---|---|---|---|---|---|---|---|
| | **Ta₂O₅ (mass%)** | **Molar ratio H₂O₂/Ta** | **Organic nitrogen compound: mass%** | **Weight ratio of Ta2O5/organic nitrogen compound** | **Dispersion pH** | **Initial particle diameter D50(nm)** | | **Time-dependent particle diameter D50(nm)** | | **Time-dependent stability** | **Film formability** |
| **Example 1** | **5** | **0.76** | **Dimethylamine : 5mass%** | **1.0** | **12.0** | **<10nm** | **A** | **<10nm** | **A** | **○** | **○** |
| **Example 2** | **5** | **0.76** | **Methylamine: 20mass%** | **4.0** | **12.9** | **<50nm** | **B** | **<50nm** | **B** | **○** | **○** |
| **Example 3** | **5** | **0.76** | **TMAH: 5mass%** | **1.0** | **13.3** | **<10nm** | **A** | **<10nm** | **A** | **○** | **○** |
| **Example 4** | **1** | **0.76** | **Dimethylamine: 1mass%** | **1.0** | **11.4** | **<100m** | **A** | **<10nm** | **A** | **○** | **○** |
| **Example 5** | **10** | **0.76** | **Dimethylamine : 10mass%** | **1.0** | **12.2** | **<50nm** | **B** | **<50nm** | **B** | **○** | **○** |
| **Example 6** | **10** | **0.76** | **TMAH: 10mass%** | **1.0** | **13.9** | **<10nm** | **A** | **<10nm** | **A** | **○** | **○** |
| **Example 7** | **5** | **0.90** | **Dimethylamine: 5mass%** | **1.0** | **11.9** | **<10nm** | **A** | **<10nm** | **A** | **○** | **○** |
| **Example 8** | **5** | **0.70** | **Dimethylamine: 5mass%** | **1.0** | **12.0** | **<10nm** | **A** | **<10nm** | **A** | **○** | **○** |
| **Example 9** | **12** | **0.76** | **Dimethylamine:20mass%** | **1.7** | **12.5** | **<50nm** | **B** | **<50nm** | **B** | **○** | **○** |
| **Example 10** | **20** | **0.76** | **TMAH: 12mass%** | **0.6** | **14.1** | **<10nm** | **A** | **<10nm** | **A** | **○** | **○** |
| **Example 11** | **5** | **0.76** | **Dimethylamine : 4mass%** | **0.8** | **11.8** | **<10nm** | **A** | **<10nm** | **A** | **○** | **○** |
| **Example 12** | **1** | **0.76** | **Dimethylamine : 40mass%** | **40.0** | **13.4** | **<100nm** | **C** | **<100nm** | **C** | **○** | **○** |
| **Example 13** | **5** | **0.76** | **Dimethylamine : 35mass%** | **7.0** | **13.0** | **<50nm** | **B** | **<50nm** | **B** | **○** | **○** |
| **Example 14** | **5** | **0.76** | **Dimethylamine : 4mass%** | **0.8** | **12.1** | **<10nm** | **A** | **<10nm** | **A** | **○** | **○** |
| | | | **Methylamine: 0.5mass%** | **0.1** | | | | | | | |
| | | | **TMAH:0.5mass%** | **0.1** | | | | | | | |
| **Comparative example 1** | **30** | **0.76** | **Dimethylamine: 30mass%** | **1.0** | **12.7** | **Precipitate** | **D** | **Precipitate** | **D** | **×** | **×** |
| **Comparative example 2** | **5** | **0.00** | **Dimethylamine: 5mass%** | **1.0** | **12.0** | **Precipitate** | **D** | **Precipitate** | **D** | **×** | **×** |
| **Comparative example 3** | **5** | **0.00** | **-** | **-** | **10.7** | **Precipitate** | **D** | **Precipitate** | **D** | **×** | **×** |
| **Comparative example 4** | **5** | **0.00** | **Dimethylamine : 5mass%** | **1.0** | **12.0** | **>100nm** | **D** | **>100nm** | **D** | **×** | **×** |
| **Comparative example 5** | **10** | **0.00** | **Dimethylamine : 10mass%** | **1.0** | **12.1** | **>100nm** | **D** | **>100nm** | **D** | **×** | **×** |

**[Table 2]**

| | **Substance specification** | | | | | | | | **Liqud/coating film evaluation** | | | |
|---|---|---|---|---|---|---|---|---|---|---|---|---|
| | **Ta₂O₅ (mass%)** | **Molar ratio H₂O₂/Ta** | **Compound** | **Molar ratio Li/Ta** | **Dispersion pH** | **NH₃ concentration (mass%)** | **Initial particle diameter D50(nm)** | | **Time-dependent particle diameter D50(nm)** | | **Time-dependent stability** | **Film formability** |
| **Example 15** | **5.0** | **1.0** | **Lithium hydroxide** | **1.0** | **12.2** | **0.7** | **<10nm** | **A** | **<10nm** | **A** | **○** | **○** |
| **Example 16** | **1.0** | **1.0** | **Lithium hydroxide** | **1.0** | **11.9** | **0.2** | **<100nm** | **C** | **<100nm** | **C** | **○** | **○** |
| **Example 17** | **10.0** | **1.0** | **Lithium hydroxide** | **1.0** | **12.3** | **1.5** | **<10nm** | **A** | **<10nm** | **A** | **○** | **○** |
| **Example 18** | **5.0** | **1.0** | **Lithium hydroxide** | **0.8** | **12.0** | **0.7** | **<10nm** | **A** | **<10nm** | **A** | **○** | **○** |
| **Example 19** | **5.0** | **1.0** | **Lithium hydroxide** | **1.5** | **12.4** | **0.7** | **<50nm** | **B** | **<50nm** | **B** | **○** | **○** |
| **Example 20** | **5.0** | **1.0** | **Lithium hydroxide** | **1.0** | **11.8** | **0.02** | **<10nm** | **A** | **<10nm** | **A** | **○** | **○** |
| **Example 21** | **5.0** | **1.0** | **Lithium hydroxide** | **1.0** | **11.7** | **0.006** | **<10nm** | **A** | **<10nm** | **A** | **○** | **○** |
| **Comparative example 6** | **15.0** | **1.0** | **Lithium hydroxide** | **1.0** | **Unmeasur able** | **-** | **Gelled** | **D** | **Gelled** | **D** | **×** | **×** |
| **Comparative example 7** | **2.7** | **32.1** | **Lithium hydroxide** | **1.0** | **12.1** | **-** | **>100mm** | **D** | **>100nm** | **D** | **×** | **×** |
| **Comparative example 8** | **2.7** | **1.0** | **Lithium hydroxide** | **1.0** | **12.2** | **-** | **>100nm** | **D** | **>100nm** | **D** | **×** | **×** |
| **Comparative example 9** | **5.0** | **0.0** | **Lithium hydroxide** | **1.0** | **12.2** | **-** | **>100nm** | **D** | **>100nm** | **D** | **×** | **×** |
| **Comparative example 10** | **5.0** | **0.0** | **Lithium hydroxide** | **1.0** | **12.2** | **-** | **>100nm** | **D** | **>100nm** | **D** | **×** | **×** |

As shown in Table 1, in a case where each of the tantalic acid compound dispersions according to Examples 1 to 14 contained the tantalum in an amount of 0.1 mass% or more and less than 30 mass% in terms of Ta₂O₅ and the particle diameter (D50) of the tantalic acid compound in the dispersion as determined by the dynamic light scattering method was 100 nm or smaller, the dispersion had high dispersibility in the dispersion medium and excellent solubility. Further, in a case where each of the tantalic acid compound dispersions according to Examples 15 to 21 contained the tantalum in an amount of 0.1 mass% or more and less than 30 mass% in terms of Ta₂O₅ and the particle diameter (D50) of the tantalic acid compound in the dispersion as determined by the dynamic light scattering method was 100 nm or smaller, the dispersion had high dispersibility in the dispersion medium and excellent solubility.

For each of the tantalic acid compound dispersions according to Examples 1 to 21, the time-dependent particle diameter (D50) of the tantalic acid compound was not found to be much different from the initial particle diameter (D50) even after 1 month had elapsed, and the dispersion was excellent in the time-dependent stability. Note that precipitates were observed in each of the tantalic acid compound dispersions according to Comparative Examples 1 to 3 and 7 to 10. Further, the tantalic acid compound in each of the tantalic acid compound dispersions according to Comparative Examples 4 and 5 had an initial particle diameter (D50) and a time-dependent particle diameter (D50) of 100 nm or larger, and were also poor in the time-dependent stability. Moreover, it was impossible to measure the initial particle diameter (D50) and the time-dependent particle diameter (D50) of the tantalic acid compound in the tantalic acid compound dispersion according to Comparative Example 6 due to the gelling.

In each of the tantalic acid compound dispersions according to Examples 15 to 21, in a case where the molar ratio Li/Ta of the lithium to the tantalum was 0.8 or higher and 2.0 or lower, and the tantalic acid concentration in the dispersion was 0.1 mass% or higher and 15 mass% or lower in terms of Ta₂O₅, the stability of the dispersion during long-term storage was improved.

Each of the tantalic acid compound dispersions according to Examples 1 to 21 was excellent in the time-dependent stability in a case where the pH of the dispersion was more than 7. Note that the tantalic acid compound dispersion according to Comparative Example 6 was gelled, and the pH could not be measured.

For a tantalic acid compound film formed from each of the tantalic acid compound dispersions according to Examples 1 to 21, as a result of observing the coating film formed from each of the tantalic acid compound dispersions with the optical microscope, no coarse particles were present in the coating film, no bubbles, coating unevenness, or cracks were observed, and the film formability of the dispersion was excellent.

The invention disclosed in the present description includes, in addition to configurations of the respective inventions and embodiments, those specified by changing these partial configurations to other configurations disclosed in the present description, those specified by adding other configurations disclosed in the present description to these configurations, or those specified by deleting these partial configurations to an extent that a partial action and effect can be obtained and forming a superordinate concept.

### Industrial Applicability

The tantalic acid compound dispersion according to the present invention has high dispersibility in the polar solvent, particularly water, has good solubility in water, and is excellent in storage stability, and thus is suitable for coating the positive electrode active material of the lithium ion secondary battery. Further, since the tantalic acid compound dispersion according to the present invention is excellent in storage stability, and a generation rate of a defective product due to generation of the precipitates can be lowered over time, it is possible to reduce waste and also cut energy cost in disposal of the waste. Moreover, since the tantalic acid compound dispersion according to the present invention is also good in film formation, the waste can be similarly reduced even in the positive electrode active material of the covered lithium ion secondary battery, and the generation rate of the defective product can be lowered. These aspects lead to sustainable management of natural resources and efficient benefits, as well as achieving decarbonization (carbon neutrality).

## Claims

1. A tantalic acid compound dispersion comprising tantalum in an amount of 0.1 mass% or more and less than 30 mass% in terms of Ta₂O₅, wherein
a particle diameter (D50) of a tantalic acid compound in the tantalic acid compound dispersion as determined by a dynamic light scattering method is 100 nm or smaller.

2. The tantalic acid compound dispersion according to claim 1, comprising an organic nitrogen compound.

3. The tantalic acid compound dispersion according to claim 1, comprising one or more elements M selected from the group consisting of alkali metal elements or alkaline earth metal elements.

4. The tantalic acid compound dispersion according to claim 3, wherein the element M is Li.

5. The tantalic acid compound dispersion according to claim 4, wherein a tantalic acid concentration in the tantalic acid compound dispersion is 0.1 mass% or higher and 15 mass% or lower in terms of Ta₂O₅.

6. The tantalic acid compound dispersion according to claim 4 or **5,** wherein a molar ratio Li/Ta of lithium (Li) to tantalum (Ta) of lithium tantalate in the tantalic acid compound dispersion is 0.8 or higher and 1.5 or lower.

7. The tantalic acid compound dispersion according to any one of claims 1 to 5, wherein the tantalic acid compound dispersion is an aqueous dispersion.

8. The tantalic acid compound dispersion according to any one of claims 1 to 5, wherein the particle diameter (D50) of the tantalic acid compound is 30 nm or smaller.

9. The tantalic acid compound dispersion according to any one of claims 1 to 5, wherein a pH of the tantalic acid compound dispersion is more than 7.

10. A tantalic acid compound powder comprising the tantalic acid compound in the tantalic acid compound dispersion according to any one of claims 1 to 5.

11. A tantalic acid compound film comprising the tantalic acid compound in the tantalic acid compound dispersion according to any one of claims 1 to 5.

12. A coating agent comprising the tantalic acid compound dispersion according to any one of claims 1 to 5.

13. A coating agent comprising the tantalic acid compound powder according to claim 10.

14. A positive electrode active material for a lithium ion secondary battery, wherein a surface of the positive electrode active material is covered with the tantalic acid compound contained in the tantalic acid compound dispersion according to any one of claims 1 to 5.

15. A lithium ion secondary battery comprising a positive electrode covered with the positive electrode active material according to claim 14.

16. A method of producing a tantalic acid compound dispersion, the method comprising:
a reaction step of generating a tantalum compound aqueous solution by adding hydrogen peroxide to a tantalum fluoride aqueous solution; and
a reverse neutralization step of generating a tantalum-containing precipitate by adding the tantalum compound aqueous solution to an alkaline aqueous solution.

17. The method of producing the tantalic acid compound dispersion according to claim 16, the method comprising a step of mixing the tantalum-containing precipitate with an organic nitrogen compound.

18. The method of producing the tantalic acid compound dispersion according to claim 16, the method comprising a step of mixing the tantalum-containing precipitate with a hydroxide of an element M including one or more elements M selected from the group consisting of alkali metal elements and alkaline earth metal elements.

19. The method of producing the tantalic acid compound dispersion according to claim 18, wherein the hydroxide of the element M is lithium hydroxide.
